# EUROPÄISCHE PATENTSCHRIFT

(11) **EP 1 258 333 B1**
(45) Veröffentlichungstag und Bekanntmachung des Hinweises auf die Patenterteilung: **14.04.2004**
(21) Anmeldenummer: 02004587.8
(22) Anmeldetag: 28.02.2002
(51) Int. Cl.: B29C 45/27

(54) **Einspritzdüse zur Führung von Schmelzemasse in einer Kunststoffspritzgiessform od. dgl.**
Injection nozzle for guiding melt in a plastic injection mould or the like
Buse d'injection pour guider une matière fondue dans un moule d'injection de matière plastique ou similaire

(30) Priorität: 14.05.2001 DE 10123314
(43) Veröffentlichungstag der Anmeldung: 20.11.2002
(73) Patentinhaber: SFR Formenbau GmbH, 72770 Reutlingen (DE)
(72) Erfinder: Reinl, Horst, 72793 Pfullingen (DE)
(74) Vertreter: Patentanwälte Ostriga & Sonnet

(56) Entgegenhaltungen:
- DE-A- 3 431 173
- DE-A- 19 936 584

## Beschreibung

Die Erfindung betrifft eine Einspritzdüse entsprechend Oberbegriff des Patentanspruchs 1. Eine solche Einspritzdüse ist in der DE 34 31 173 C2 beschrieben.

Obwohl sich die bekannte Einspritzdüse dieser Gattung in der Praxis vielfach bewährt hat, sind für gewisse Anwendungen Verbesserungen wünschenswert. Insbesondere kann es bei der bekannten Einspritzdüse in Verbindung mit flammgeschützten Kunststoffen beim Austreten von Gasen zu Korrosionserscheinungen an der hinteren Stirnfläche des z. B. aus Beryllium oder aus einer Berylliumlegierung bestehenden Düsenkerns kommen. Mit derartigen Korrosionserscheinungen können lästige Schmelze-Leckagen einhergehen.

Ausgehend von der Einspritzdüse gemäß der DE 34 31 173 C2, liegt der Erfindung die Aufgabe zugrunde, die bekannte Düse so weiterzuentwickeln, dass sie insbesondere unter Vermeidung der vorbeschriebenen Unzulänglichkeiten gegen Leckagen im hinteren Abdichtungsbereich weitestgehend unempfindlich ist.

Diese Aufgabe wird entsprechend der Gesamtheit der Merkmale des Anspruchs 1 gelöst.

Insbesondere dadurch, dass zwischen der hinteren Stirnfläche des Düsenkerns und der hinteren Widerlagerfläche eine aus korrosionsbeständigem Werkstoff bestehende Schutzkappe angeordnet ist, welche mit einer vorderen Dichtfläche an der hinteren Stirnfläche des Düsenkems und welche mit einer hinteren Dichtfläche an der hinteren Widerlagerfläche anliegt, ist die hintere Stirnfläche des beispielsweise aus Beryllium oder aus einer Berylliumlegierung bestehenden Düsenkerns weitestgehend vor einem unmittelbaren Angriff aggressiver Kunststoffschmelzen gesichert, so dass Korrosionserscheinungen, damit auch lästige Schmelze-Leckagen, weitestgehend vermieden werden können.

Obwohl eine Abdichtung zwischen der hinteren Widerlagerfläche und der hinteren Dichtfläche der Schutzkappe an sich genügt, um die hintere Stirnfläche des Düsenkerns gegen einen Korrosionsangriff zu schützen, besteht eine besonders vorteilhafte Ausführungsform entsprechend der Erfindung darin, dass die vordere Dichtfläche der Schutzkappe vollflächig an der hinteren Stirnfläche des Düsenkerns anliegt.

Die Dichtungszone ist zweckmäßig derart ausgebildet, dass die hintere Stirnfläche des Düsenkerns, die vordere Dichtfläche der Schutzkappe, die hintere Dichtfläche der Schutzkappe und die hintere Widerlagerfläche jeweils miteinander korrespondierende Kreisringflächen bilden.

Im einzelnen hat es sich als zweckmäßig herausgestellt, dass die hintere Stirnfläche des Düsenkerns und die vordere Dichtfläche der Schutzkappe sich bezüglich des Schmelzekanals radial erstreckende Kreisringflächen bilden, während die hintere Dichtfläche der Schutzkappe und die hintere Widerlagerfläche jeweils eine Kegelstumpf-Mantelfläche aufweisen.

In weiterer Ausgestaltung der Erfindung bilden die hintere Dichtfläche der Schutzkappe und die hintere Widerlagerfläche benachbart dem Schmelzekanal jeweils eine sich radial erstreckende Kreisringfläche und, daran außen anschließend, jeweils eine Kegelstumpf-Mantelfläche.

Die Schutzkappe kann erfindungsgemäß aus Stahl, wie z.B. aus rostfreiem Stahl, aus Molybdän oder aus einer Molybdänlegierung bestehen.

In weiterer Ausgestaltung der Erfindung ist innerhalb einer kreiszylindrischen Aufnahme des Düsenkems zwischen der Düsenspitze und der Schutzkappe ein sowohl bezüglich der Düsenspitze als auch bezüglich der Schutzkappe dichtend angeordnetes kreiszylindrisches Schmelzeführungsrohr vorhanden, welches durch die DE 34 31 173 C2 an sich bekannt ist.

Eine besonders bevorzugte Ausgestaltung entsprechend der Erfindung besteht indessen darin, dass die Schutzkappe mit dem Schmelzeführungsrohr stoffschlüssig verbunden ist. Auf diese Art und Weise wird eine vollkommene Abdichtung der hinteren Stirnfläche des Düsenkerns bezüglich der hinteren Widerlagerfläche erzielt. Auch wird durch diese vorteilhafte erfindungsgemäße Ausführungsform die Bildung eines Ringspalts zwischen Schmelzeführungsrohr und kreiszylindrischer Aufnahme des Düsenkerns vermieden. Ein solcher Ringspalt kann sich nämlich mit Schmelzemasse füllen und dadurch Probleme bei Farbwechsel hervorrufen oder bei fortschreitendem Masseaufbau ebenfalls zu Leckagen führen.

Eine andere vorteilhafte Variante der Erfindung besteht darin, dass die Düsenspitze mit dem Schmelzeführungsrohr stoffschlüssig verbunden ist.

Weiterhin hat es sich als zweckmäßig erwiesen, dass Schutzkappe und Schmelzeführungsrohr aus demselben Werkstoff bestehen, ebenso wie Düsenspitze und Schmelzeführungsrohr.

Um eine große mechanische Widerstandsfähigkeit gegen Kunststoffschmelzen mit abrasiven Beimengungen zu erzielen, hat es sich als zweckmäßig herausgestellt, dass die Innenmantelfläche des Schmelzeführungsrohres und die Innenmantelfläche der Schutzkappe chemisch vernickelt sind. Eine derartige chemische Vernickelung gestattet sehr große Oberflächenhärten. Um indessen eine präzise axiale Anpassung zu ermöglichen, die gegebenenfalls ein Abarbeiten der hinteren Dichtfläche der Schutzkappe, beispielsweise ein gewisses Schleifabmaß, erfordert, hat es sich als zweckmäßig herausgestellt, die hintere Dichtfläche der Schutzkappe zwecks besserer Bearbeitbarkeit von der chemischen Vernickelung auszunehmen. Dies geschieht entsprechend der Erfindung dadurch, dass die hintere Dichtfläche der Schutzkappe vor der chemischen Vernickelung mit einer Schutzschicht, wie mit einer Lackschicht od. dgl., versehen ist.

Eine weitere Ausgestaltung der Erfindung kennzeichnet sich dadurch, dass der größte Außendurchmesser der Düsenspitze gleich oder geringer ist als der größte Außendurchmesser des Schmelzeführungsrohres. Diese Erfindungsmerkmale gestatten insbesondere in Verbindung mit der bevorzugten Ausführungsform, bei welcher die Schutzkappe und die Düsenspitze stoffschlüssig mit dem Schmelzeführungsrohr verbunden sind, eine Durchsteckmontage von hinten nach vorn durch den Düsenkern hindurch der aus Düsenspitze, Schmelzeführungsrohr und Schutzkappe bestehenden einstückigen Baugruppe.

In der Zeichnung ist ein bevorzugtes Ausführungsbeispiel entsprechend der Erfindung dargestellt.

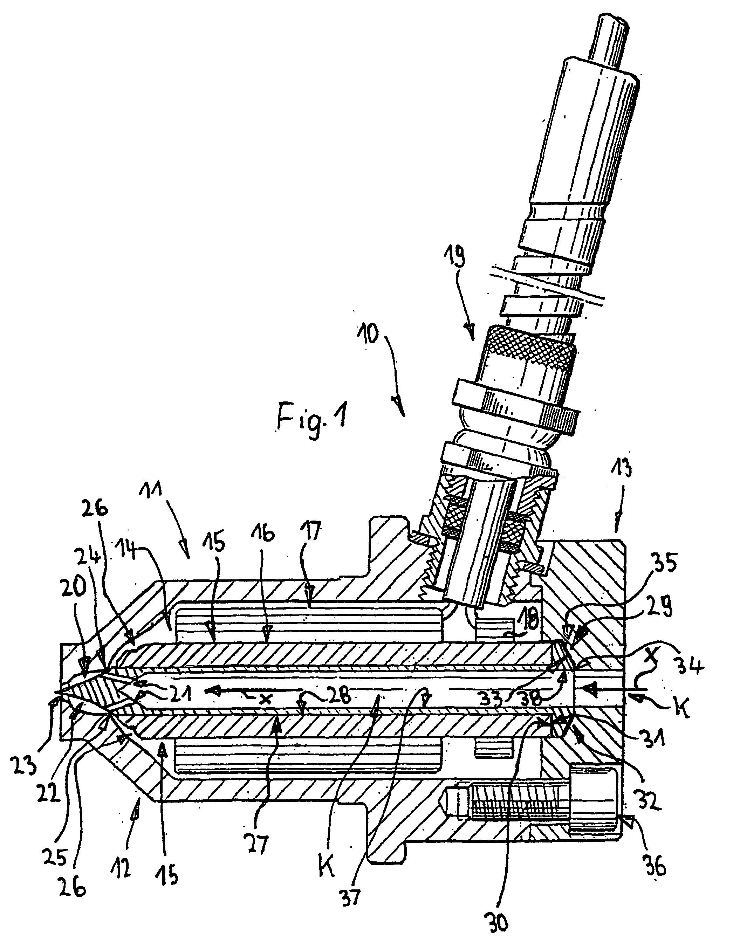

Fig. 1 zeigt einen radialen Teilschnitt durch eine Einspritzdüse.

Die insgesamt mit 10 bezeichnete Einspritzdüse zur Führung einer Kunststoff-Schmelzemasse weist ein Düsengehäuse 11 auf, welches aus einem vorderen Gehäuseteil 12 und aus einem hinteren Gehäusedeckel 13 besteht.

Innerhalb des Düsengehäuse-Innenraums 14 ist ein aus Beryllium oder aus einer Berylliumlegierung bestehender Düsenkern 15 angeordnet. Der Düsenkern 15 trägt auf seiner Außenmantelfläche 16 eine elektrische Heizmanschette 17 und zur Wärmeregulierung ein Thermoelement 18. Die elektrische Einspeisung der Heizmanschette 17 und die Regelung im Zusammenhang mit dem Thermoelement 18 werden über eine insgesamt mit 19 bezeichnete Kabelanordnung bewerkstelligt.

Anstelle der Heizmanschette 17 kann auch in bekannter Weise ein Rohrheizkörper vorgesehen sein, der in einer schraubenlinienförmigen Außennut in die Außenmantelfläche 16 des Düsenkerns 15 eingelassen ist.

Die Strömungsrichtung der Kunststoffschmelze ist mit x angegeben. Bezüglich der Strömungsrichtung x der Kunststoffschmelze vom ist dem Düsenkern 15 eine Düsenspitze 20 zugeordnet. Die Düsenspitze 20 ist von zwei oder mehreren Durchströmkanälen 21 für die Kunststoffschmelze durchsetzt, welche sodann auf ihrem Strömungsweg in eine Düsenkammer 22 und von dort aus durch eine Düsenöffnung 23 hindurch in einen nicht dargestellten Formhohlraum einer Kunststoffspritzgießform hineingelangt.

Die Düsenspitze 20 bildet zugleich für den Düsenkern 15 eine sehr kleinflächige vordere Anlagefläche 24, welche sich an der mit 25 bezeichneten vorderen Widerlagerfläche abstützt, die innen vom vorderen Gehäuseteil 12 des Düsengehäuses 11 gebildet ist.

Um eine unzulässige Wärmeübertragung zwischen dem aus Beryllium oder einer Berylliumlegierung bestehenden eigentlichen Düsenkern 15 und dem Düsengehäuse 11 zu vermeiden, ist zwischen der Innenfläche des vorderen Bereichs des Gehäuseteils 12 und dem vorderen Bereich des Düsenkerns 15 ein Ringspalt (Luftspalt) 26 gebildet.

Mit der Düsenspitze 20 werkstoffeinheitlich und stoffschlüssig verbunden ist ein kreiszylindrisches Schmelzeführungsrohr 27, welches in einer korrespondierenden kreiszylindrischen Aufnahme 28 des Düsenkerns 15 thermisch eingeschrumpft ist.

Ebenfalls werkstoffeinheitlich und stoffschlüssig mit dem Schmelzeführungsrohr 27 verbunden ist an der hinteren Seite des Düsenkerns 15 eine Schutzkappe 29, welche mit einer vorderen Dichtfläche 30 an einer hinteren Stirnfläche 31 des Düsenkerns 15 dichtend anliegt. Außerdem liegt die Schutzkappe 29 mit einer insgesamt mit 32 bezeichneten hinteren Dichtfläche an einer vom Gehäusedeckel 13 gebildeten Widerlagerfläche 33 dichtend an.

Die hintere Dichtfläche 32 der Schutzkappe 29 setzt sich aus einer dem Schmelzekanal K benachbart angeordneten radialen Kreisringfläche 34 und aus einer sich daran außen anschließenden Kegelstumpf-Mantelfläche 35 zusammen.

Der Gehäusedeckel 13 ist mittels mehrerer Schrauben 36 fest mit dem vorderen Gehäuseteil 12 verschraubt. Das Düsengehäuse 11 besteht aus Stahl, während - wie vorerwähnt - der Düsenkern 15 aus einem hochwärmeleitfähigen Metall, insbesondere aus. Beryllium oder aus einer Berylliumlegierung (z.B. Kupfer-Kobalt-Beryllium), besteht. Wegen des im Vergleich zu Stahl größeren thermischen linearen Ausdehnungskoeffizienten seines Werkstoffes verspannt sich der erwärmte Düsenkern 15 mit seiner vorderen Anlagefläche 14 - und mittelbar über die hintere Dichtfläche 32 der Schutzkappe 29 - fest zwischen der vorderen düsengehäuseseitigen Widerlagerfläche 25 und der hinteren düsengehäuseseitigen Widerlagerfläche 33.

Eine durch die unterschiedliche Wärmeausdehnung der verschiedenen Werkstoffe des Düsenkerns 15, der Schutzkappe 29 und gegebenenfalls des Schmelzführungsrohres 27 eventuell auftretende Spaltbildung zwischen dem Düsenkern 15 und der Schutzkappe 29 einerseits sowie der Schutzkappe 29 und der Widerlagerfläche 33 andererseits wird durch die größere Wärmelängenausdehnung des Düsenkerns 15 vollständig vermieden.

Eine entsprechend dichte Anlage ergibt sich zugleich zwischen der vorderen Dichtfläche 30 der Schutzkappe 29 und der hinteren Stirnfläche 31 des Düsenkerns 15 einerseits sowie der düsengehäuseseitigen hinteren Widerlagerfläche 33 und der hinteren Dichtfläche 32 der Schutzkappe 29 andererseits.

Eine vollkommene Abdichtung im hinteren Übergangsbereich zwischen Gehäusedeckel 13 und Düsenkern 15 wird dadurch erzielt, dass die Schutzkappe 29 stoffschlüssig und werkstoffeinheitlich mit dem Schmelzeführungsrohr 27 verbunden ist.

Zur Erzielung einer größeren mechanischen Widerstandsfähigkeit gegen abrasive Bestandteile der Kunststoffschmelze sind die Innenmantelfläche 37 des Schmelzeführungsrohres 27 und die Innenmantelfläche 38 der Schutzkappe 29 mit einer chemisch gebildeten Nickelschicht großer Oberflächenhärte versehen. Um eine anpassungsbedingte mechanische Bearbeitung der hinteren Dichtfläche 32 der Schutzkappe 29 zu ermöglichen, wird die hintere Dichtfläche 32 vor der chemischen Vernickelung mit einer Schutzschicht, beispielsweise mit einer Lackschicht, versehen.

Die vorliegende Erfindung bezieht sich sowohl auf Einspritzdüsen, die, wie im vorliegenden Falle, ein Düsengehäuse 11 aufweisen, als auch auf gehäuselose Einspritzdüsen. Bei gehäuselosen Einspritzdüsen wird die aus Fig. 1 ersichtliche Innenfläche des Düsengehäuses 11 durch Elemente der Werkzeugform selbst gebildet.

## Patentansprüche

1. Einspritzdüse (10) zur Führung von Schmelzemasse in einer Kunststoffspritzgießform od. dgl., mit einem aus hochwärmeleitfähigem Werkstoff, wie aus Beryllium, einer Berylliumlegierung od. dgl. gebildeten, einen Schmelzekanal (K) umgebenden Düsenkern (15), dessen Außenmantelfläche (16) eine Heizvorrichtung (17) trägt und welcher an seinem bezüglich des Schmelzestroms stromabwärts gelegenen vorderen Ende (bei 24) eine der Formhöhlung einer Werkzeugform benachbarte Düsenspitze (20) trägt, welcher sich mit seinem vorderen Ende (bei 24) an einer vorderen Widerlagerfläche (25) dichtend abstützt, welcher sich mit seiner der Düsenspitze (20) abgewandten hinteren Stirnfläche (31) mindestens mittelbar an einer hinteren Widerlagerfläche (33) dichtend abstützt und welcher zwischen beiden Widerlagerflächen (25, 33) axial eingespannt ist, **dadurch gekennzeichnet, daß** zwischen der hinteren Stirnfläche (31) des Düsenkems (15) und der hinteren Widerlagerfläche (33) eine aus korrosionsbeständigem Werkstoff bestehende Schutzkappe (29) angeordnet ist, welche mit einer vorderen Dichtfläche (30) an der hinteren Stirnfläche (31) des Düsenkerns (15) und welche mit einer hinteren Dichtfläche (32) an der hinteren Widerlagerfläche (33) anliegt.

2. Einspritzdüse nach Anspruch 1, **dadurch gekennzeichnet, dass** die vordere Dichtfläche (30) der Schutzkappe (29) vollflächig an der hinteren Stimfläche (31) des Düsenkerns (15) anliegt.

3. Einspritzdüse nach Anspruch 1 oder nach Anspruch 2, **dadurch gekennzeichnet, dass** die hintere Stirnfläche (31) des Düsenkerns (15), die vordere Dichtfläche (30) der Schutzkappe (29), die hintere Dichtfläche (32) der Schutzkappe (29) und die hintere Widerlagerfläche (33) jeweils miteinander korrespondierende Kreisringflächen bilden.

4. Einspritzdüse nach einem der Ansprüche 1 bis 3, **dadurch gekennzeichnet, dass** die hintere Stirnfläche (31) des Düsenkerns (15) und die vordere Dichtfläche (30) der Schutzkappe (27) sich bezüglich des Schmelzekanals (K) radial erstreckende Kreisringflächen bilden.

5. Einspritzdüse nach einem der Ansprüche 1 bis 4, **dadurch gekennzeichnet, dass** die hintere Dichtfläche (32) der Schutzkappe (29) und die hintere Widerlagerfläche (31) jeweils eine Kegelstumpf-Mantelfäche (bei 35) aufweisen.

6. Einspritzdüse nach Anspruch 5, **dadurch gekennzeichnet, dass** die hintere Dichtfläche (32) der Schutzkappe (29) und die hintere Widerlagerfläche (33) benachbart dem Schmelzekanal (K) jeweils eine sich radial erstreckende Kreisringfläche (bei 34) und, daran außen anschließend, jeweils eine Kegelstumpf-Mantelfläche (bei 35) bilden.

7. Einspritzdüse nach einem der Ansprüche 1 bis 6, **dadurch gekennzeichnet, dass** die Schutzkappe (29) aus Stahl, wie z.B. aus rostfreiem Stahl, besteht.

8. Einspritzdüse nach einem der Ansprüche 1 bis 6, **dadurch gekennzeichnet, dass** die Schutzkappe (29) aus Molybdän oder aus einer Molybdänlegierung besteht.

9. Einspritzdüse nach einem der Ansprüche 1 bis 8, **dadurch gekennzeichnet, dass** innerhalb einer kreiszylindrischen Aufnahme (28) des Düsenkerns (15) zwischen der Düsenspitze (20) und der Schutzkappe (29) ein sowohl bezüglich der Düsenspitze (20) als auch bezüglich der Schutzkappe (29) dichtend angeordnetes kreiszylindrisches Schmelzeführungsrohr (27) vorhanden ist.

10. Einspritzdüse nach Anspruch 9, **dadurch gekennzeichnet, dass** die Schutzkappe (29) mit dem Schmelzeführungsrohr (27) stoffschlüssig verbunden ist.

11. Einspritzdüse nach einem der Ansprüche 1 bis 10, **dadurch gekennzeichnet, dass** die Düsenspitze (20) mit dem Schmelzeführungsrohr (27) stoffschlüssig verbunden ist.

12. Einspritzdüse nach einem der Ansprüche 1 bis 11, **dadurch gekennzeichnet, dass** Schutzkappe (29) und Schmelzführungsrohr (27) aus demselben Werkstoff bestehen.

13. Einspritzdüse nach einem der Ansprüche 9 bis 11, **dadurch gekennzeichnet, dass** Düsenspitze (20) und Schmelzführungsrohr (27) aus demselben Werkstoff bestehen.

14. Einspritzdüse nach einem der Ansprüche 9 bis 13, **dadurch gekennzeichnet, dass** die Innenmantelfläche (37) des Schmelzeführungsrohres (27) und die Innenmantelfläche (38) der Schutzkappe (29) chemisch vernickelt sind.

15. Einspritzdüse nach Anspruch 14, **dadurch gekennzeichnet, dass** die hintere Dichtfläche (32) der Schutzkappe (29) vor der chemischen Vemickelung mit einer Schutzschicht, wie mit einer Lackschicht od. dgl., versehen ist.

16. Einspritzdüse nach einem der Ansprüche 9 bis 15, **dadurch gekennzeichnet, dass** der größte Außendurchmesser der Düsenspitze (20) gleich oder geringer ist als der größte Außendurchmesser des Schmelzeführungsrohres (27).

## Claims

1. An injection nozzle (10) for guiding hot melt compound in a plastics injection mould or the like, having a nozzle core (15) which is made from a material with high thermal conductivity, such as beryllium, a beryllium alloy or the like, which surrounds a melt flow-way (K) and whereof the outer surface (16) carries a heating device (17) and which carries at its front end (at 24) located downstream in respect of flow of the melt a nozzle point (20) which is adjacent to the mould cavity of a mould, this nozzle core being supported in sealing manner by means of its front end (at 24) against a front abutment face (25) and being supported in sealing manner by means of its rear end face (31) remote from the nozzle point (20) at least indirectly against a rear abutment face (33), and this nozzle core being clamped axially between the two abutment faces (25, 33), **characterised in that** between the rear end face (31) of the nozzle core (15) and the rear abutment face (33) there is arranged a protective cap (29) which is made from a corrosion-resistant material and which abuts by means of a front sealing face (30) against the rear end face (31) of the nozzle core (15) and abuts by means of a rear sealing face (32) against the rear abutment face (33).

2. An injection nozzle according to Claim 1, **characterised in that** the front sealing face (30) of the protective cap (29) abuts over its full surface against the rear end face (31) of the nozzle core (15).

3. An injection nozzle according to Claim 1 or Claim 2, **characterised in that** the rear end face (31) of the nozzle core (15), the front sealing face (30) of the protective cap (29), the rear sealing face (32) of the protective cap (29) and the rear abutment face (33) form in each case mutually corresponding annular faces.

4. An injection nozzle according to one of Claims 1 to 3, **characterised in that** the rear end face (31) of the nozzle core (15) and the front sealing face (30) of the protective cap (27) form annular faces which extend radially in respect of the melt flow-way (K).

5. An injection nozzle according to one of Claims 1 to 4, **characterised in that** the rear sealing face (32) of the protective cap (29) and the rear abutment face (31) each have an outer surface (at 35) in the shape of a truncated cone.

6. An injection nozzle according to Claim 5, **characterised in that** the rear sealing face (32) of the protective cap (29) and the rear abutment face (33) each form adjacent to the melt flow-way (K) a radially extending annular face (at 34) and, outwardly adjoining the latter, an outer surface (at 35) in the shape of a truncated cone.

7. An injection nozzle according to one of Claims 1 to 6, **characterised in that** the protective cap (29) is made from steel, for example stainless steel.

8. An injection nozzle according to one of Claims 1 to 6, **characterised in that** the protective cap (29) is made from molybdenum or a molybdenum alloy.

9. An injection nozzle according to one of Claims 1 to 8, **characterised in that** within a cylindrical receiver (28) in the nozzle core (15) between the nozzle point (20) and the protective cap (29) there is a cylindrical melt flow-way tube (27) which is arranged in sealing manner both in respect of the nozzle point (20) and in respect of the protective cap (29).

10. An injection nozzle according to Claim 9, **characterised in that** the protective cap (29) is materially connected to the melt flow-way tube (27).

11. An injection nozzle according to one of Claims 1 to 10, **characterised in that** the nozzle point (20) is materially connected to the melt flow-way tube (27).

12. An injection nozzle according to one of Claims 1 to 11, **characterised in that** the protective cap (29) and the melt flow-way tube (27) are made from the same material.

13. An injection nozzle according to one of Claims 9 to 11, **characterised in that** the nozzle point (20) and the melt flow-way tube (27) are made from the same material.

14. An injection nozzle according to one of Claims 9 to 13, **characterised in that** the inner surface (37) of the melt flow-way tube (27) and the inner surface (38) of the protective cap (29) are nickel-plated.

15. An injection nozzle according to Claim 14, **characterised in that** the rear sealing face (32) of the protective cap (29) is provided with a protective layer, such as a coated layer or the like, before the nickel-plating.

16. An injection nozzle according to one of Claims 9 to 15, **characterised in that** the largest external diameter of the nozzle point (20) is equal to or smaller than the largest external diameter of the melt flow-way tube (27).

## Revendications

1. Buse d'injection (10) pour guider une masse de matière fondue dans un moule d'injection de matière synthétique ou analogue, avec un noyau de buse (15) formé d'un matériau fortement conducteur de la chaleur, tel que de béryllium, d'un alliage de béryllium ou analogue, entourant un canal à masse fondue (K), noyau de buse dont la surface d'enveloppe extérieure (16) porte un dispositif de chauffage (17) et qui, sur son extrémité avant (en 24), placée en aval par rapport au flux de masse fondue, porte une pointe de buse (20), voisine de la cavité de moulage d'un moule à outil, le noyau prenant appui de façon étanche, par son extrémité avant (en 24), sur une surface de contre-appui (25) avant, le noyau prenant de façon étanche, par sa face frontale (31) arrière, opposée à la pointe de buse (20) au moins indirectement sur une face de contre-appui arrière (33), et le noyau étant enserré axialement entre deux faces de contre-appui (25, 33), **caractérisée en ce que**, entre la face frontale arrière (31) du noyau de buse (15) et la face de contre-appui arrière (33) est disposé un capuchon de protection (29) formé d'un matériau résistant à la corrosion, appuyant, par une face d'étanchéité (30) avant, sur la face frontale (31) arrière du noyau de buse (15) et, par une face d'étanchéité arrière (32), sur la face de contre-appui arrière (33).

2. Buse d'injection selon la revendication 1, **caractérisée en ce que** la face d'étanchéité avant (30) du capuchon de protection (29) appuie sur toute sa surface sur la face frontale (31) arrière du noyau de buse (15).

3. Buse d'injection selon la revendication 1 ou selon la revendication 2, **caractérisée en ce que** la face frontale arrière (31) du noyau de buse (15), la face d'étanchéité avant (30) du capuchon de protection (29), la face d'étanchéité arrière (32) du capuchon de protection (29) et la face de contre-appui arrière (33) forment, chacune, des faces en anneaux de cercle, se correspondant entre elles.

4. Buse d'injection selon l'une des revendications 1 à 3, **caractérisée en ce que** la face frontale arrière (31) du noyau de buse (15) et la face d'étanchéité avant (30) du capuchon de protection (27) forment des faces en anneaux de cercle, s'étendant radialement par rapport au canal à masse fondue (K).

5. Buse d'injection selon l'une des revendications 1 à 4, **caractérisée en ce que** la face d'étanchéité arrière (32) du capuchon de protection (29) et la face de contre-appui arrière (31) présentent chacune (en 35) une face d'enveloppe tronconique.

6. Buse d'injection selon la revendication 5, **caractérisée en ce que** la face d'étanchéité arrière (32) du capuchon de protection (29) et la face de contre-appui (33) forment, au voisinage du canal à masse fondue (K), chaque fois une face en anneau de cercle s'étendant radialement (en 34) et, s'y raccordant extérieurement, chaque fois, une face d'enveloppe tronconique (en 35).

7. Buse d'injection selon l'une des revendications 1 à 6, **caractérisée en ce que** le capuchon de protection (29) est réalisé en acier, tel que par exemple en acier inoxydable.

8. Buse d'injection selon l'une des revendications 1 à 6, **caractérisée en ce que** le capuchon de protection (29) est réalisé en molybdène ou bien d'un alliage de molybdène.

9. Buse d'injection selon l'une des revendications 1 à 8, **caractérisée en ce que**, à l'intérieur d'un logement (28) cylindrique, à section circulaire, du noyau de buse (15), entre la pointe de buse (20) et le capuchon de protection (29), est prévu un tube d'amenée de masse fondue (27) cylindrique à section circulaire, disposé de façon étanche par rapport à la pointe de buse (20), ainsi qu'également par rapport au capuchon de protection (29).

10. Buse d'injection selon la revendication 9, **caractérisée en ce que** le capuchon de protection (29) est relié au tube d'amenée de masse fondue (27), par une liaison faisant appel à la matière.

11. Buse d'injection selon l'une des revendications 1 à 10, **caractérisée en ce que** la pointe de buse (20) est reliée au tube d'amenée de masse fondue (27), par une liaison faisant appel à la matière.

12. Buse d'injection selon l'une des revendications 1 à 11, **caractérisée en ce que** le capuchon de protection (29) et le tube d'amenée de masse fondue (27) sont formés du même matériau.

13. Buse d'injection selon l'une des revendications 1 à 11, **caractérisée en ce que** la pointe de buse (20) et le tube d'amenée de masse fondue (27) sont formés du même matériau.

14. Buse d'injection selon l'une des revendications 9 à 13, **caractérisée en ce que** la face d'enveloppe intérieure (37) du tube d'amenée de masse fondue (27) et la face d'enveloppe intérieure (38) du capuchon de protection (29) sont nickelées par voie chimique.

15. Buse d'injection selon la revendication 14, **caractérisée en ce que** la face d'étanchéité arrière (32) du capuchon de protection (29), avant de procéder au nickelage chimique, est munie d'une couche protectrice, telle qu'une couche de vernis ou analogue.

16. Buse d'injection selon l'une des revendications 9 à 15, **caractérisée en ce que** le diamètre extérieur maximal de la pointe de buse (20) est égal ou supérieur au diamètre extérieur maximal du tube d'amenée de masse fondue (27).
